# EUROPÄISCHE PATENTANMELDUNG

(11) **EP 3 170 795 A1**
(43) Veröffentlichungstag der Anmeldung: **24.05.2017**
(21) Anmeldenummer: 16197910.9
(22) Anmeldetag: 13.12.2011
(51) Int. Cl.: C02F 1/00, C02F 1/52

(54) **ABSCHEIDEVORRICHTUNG, UM FETTE AUS WASSER ABZUSCHEIDEN, SOWIE VERFAHREN ZUM ABSCHEIDEN VON FETTEN AUS WASSER**

(30) Priorität: 14.12.2010 DE 102010061206
(62) Teilanmeldung aus: 11193156.4
(71) Anmelder: ACO Severin Ahlmann GmbH & Co. KG, 24782 Büdelsdorf (DE)
(72) Erfinder: Brinkhoff, Alexander, 99817 Eisenach (DE); Paluchowski, Dariusz, 36404 Vacha (DE); Eulenstein, Marco, 36251 Bad Hersfeld (DE)
(74) Vertreter: Bohnenberger, Johannes

(57) **Zusammenfassung**

Es wird eine Abscheidevorrichtung (20), um Fette aus Wasser (25) abzuscheiden, aufgezeigt, umfassend einen Fettabscheider (1) mit einem Zulauf (2) zum Zuführen des Wassers (25) und einem Ablauf (3) zum Abführen des Wassers (25), einen Flockungsmittelbehälter (6) mit einem Flockungsmittel (10) zum Ausflocken von Fetten aus dem Wasser (25), eine Zufuhrleitung (4) zum Zuführen des Flockungsmittels (10) aus dem Flockungsmittelbehälter (6) in den Fettabscheider (1) und einen Schlammfang zum Aufnehmen des geflockten Fetts.

## Beschreibung

Die Erfindung betrifft eine Abscheidevorrichtung, um Fette aus Wasser abzuscheiden, nach dem Oberbegriff des Patentanspruchs 1 und ein Verfahren zum Abscheiden von Fetten aus Wasser gemäß Patentanspruch 11.

Fettabscheider sind in vielen Großküchen, Tankstellen und anderen Betrieben notwendig, um Fett aus (Ab-)Wasser abzuscheiden, bevor das gereinigte Wasser in die Kanalisation gelangt.

Die DE 10 2004 014 517 A1 beschreibt eine Abscheidevorrichtung mit einem Schwerkraftabscheider, einem Entnahmebecken und einer Flotationsanlage. Das Abwasser läuft vom Vorbehandlungsbecken in das Entnahmebecken. Aus dem Entnahmebecken wird Abwasser zu der Flotationsanlage gefördert. Über eine Dosiervorrichtung wird in die Zuleitung zur Flotationsanlage Fällungs- und Flockungsmittel zudosiert. Die durch Ausfällen der lipophilen Stoffe entstehenden Makroflocken werden in der Flotationseinheit durch Zuführung mikroskopisch kleiner Luftblasen zum Flotieren gebracht. Der Flotatschlamm wird über die Flotatleitung abgeführt und wird dem Schwerkraftabscheider wieder zugeführt. Die in der Flotationsanlage unten ablaufende Klarwasserphase wird gereinigt in das öffentliche Kanalnetz geleitet. Nachteilig hieran ist, dass mehrere Flüssigkeitsbehälter benötigt werden und die Abscheidevorrichtung somit sehr groß ist. Auch nachteilig ist, dass eine Vielzahl von Pumpen bzw. Leitungen zum Befördern des Wassers benötigt werden, wodurch die Abscheidevorrichtung sehr fehleranfällig wird. Ein weiterer Nachteil ist, dass ein bestehender Schwerkraftfettabscheider nicht bzw. nur mit äußerst großem Aufwand und Kosten zu einer solchen Abscheidvorrichtung umgebaut werden kann. Eine "Nachrüstung" eines bestehenden Fettabscheiders ist somit praktisch nicht möglich.

Der Erfindung liegt die Aufgabe zu Grunde, eine Abscheidevorrichtung aufzuzeigen, die in technisch einfacher Art und Weise Fette aus dem Wasser abscheidet.

Diese Aufgabe wird durch eine Abscheidevorrichtung nach Patentanspruch 1 sowie ein Verfahren nach Patentanspruch 11 gelöst.

Insbesondere wird die Aufgabe durch eine Abscheidevorrichtung, um Fette aus Wasser abzuscheiden, gelöst, umfassend: einen Fettabscheider mit einem Zulauf zum Zuführen des Wassers und einem Ablauf zum Abführen des Wassers, einen Flockungsmittelbehälter mit einem Flockungsmittel zum Ausflocken von Fetten aus dem Wasser, eine Zufuhrleitung zum Zuführen des Flockungsmittels aus dem Flockungsmittelbehälter in den Fettabscheider und einen Schlammfang zum Aufnehmen des ausgeflockten Fetts.

Ein wesentlicher Punkt der Erfindung besteht darin, dass das Flockungsmittel dem Wasser direkt in dem Fettabscheider zugeführt wird, wodurch das Fett aus dem Wasser in dem Fettabscheider ausflockt und sich in dem Fettabscheider absetzt. Vorteilhaft hieran ist, dass neben dem Fettabscheider kein zusätzlicher Flüssigkeitsbehälter für das Wasser bzw. Fett neben dem Fettabscheider benötigt wird. Des Weiteren ist vorteilhaft, dass die Abscheidevorrichtung klein ist und daher den Abmaßen einer Standardanlage nach den gültigen DIN-Normen entspricht. Darüber hinaus ist vorteilhaft, dass auch ein bestehender Fettabscheider technisch einfach derart nachgerüstet werden kann, dass eine erfindungsgemäße Abscheidevorrichtung gebildet wird. Die Abscheidevorrichtung zeichnet sich durch ihre technische Einfachheit und ihre geringe Anzahl an Komponenten aus. Hierdurch wird die Fehleranfälligkeit der Abscheidevorrichtung stark verringert. Zudem wird dem Wasser neben dem Flockungsmittel nichts weiter zugeführt. Auch lässt sich das ausgeflockte und abgesetzte Fett einfach aus der Abscheidevorrichtung entfernen und entsorgen. Durch den Schlammfang wird zudem die Wartung der Abscheidevorrichtung vereinfacht, da keine zusätzlichen Schritte zum Entfernen des ausgeflockten Fetts aus dem Fettabscheider neben den üblichen Schritten zum Entfernen des Schlamms nötig sind. Das ausgeflockte Fett wird zusammen mit dem Schlamm im Schlammfang aufgefangen und wird wie bei einer Standard-Abscheidevorrichtung entsorgt.

In einer Ausführungsform ist die Zufuhrleitung zum Zuführen des Flockungsmittels in den Zulauf ausgebildet. Ein Vorteil hiervon ist, dass das Flockungsmittel möglichst lange in Kontakt mit dem Wasser steht, bevor das Wasser den Fettabscheider wieder verlässt. Vorteilhaft ist auch, dass eine gute Vermischung zwischen dem Flockungsmittel und dem Wasser stattfindet, da in der Zufuhrleitung bzw. direkt am Ausgang der Zufuhrleitung große Strömungen auftreten.

In einer weiteren Ausführungsform ist eine Füllstandssonde zum Überwachen der Menge des Flockungsmittels im Flockungsmittelbehälter vorgesehen. Vorteilhaft hieran ist, dass der Anwender der Abscheidevorrichtung kontrollieren kann, ob noch genügend Flockungsmittel im Flockungsmittelbehälter vorhanden ist und gegebenenfalls Flockungsmittel in den Flockungsmittelbehälter nachfüllen kann. Hierdurch wird verhindert, dass die Abscheidevorrichtung mit zu wenig bzw. ohne Flockungsmittel betrieben wird und daher ihre Funktion schlecht bzw. nicht erfüllen kann.

In einer weiteren Ausführungsform umfasst die Abscheidevorrichtung eine Dosiervorrichtung zum Dosieren der in den Fettabscheider zugeführten Menge an Flockungsmittel in der Zufuhrleitung. Durch eine solche Dosiervorrichtung kann die zugeführte Menge an Flockungsmittel entsprechend der benötigten Menge an Flockungsmittel in dem Fettabscheider gesteuert werden. Eine Über- oder Unterdosierung an Flockungsmittel wird hierdurch verhindert.

Die Dosiervorrichtung kann mittels einer im Zulauf angeordneten Strömungssonde und/oder mittels einer Zeitschaltvorrichtung gesteuert werden. Hierdurch kann die zugeführte Menge an Flockungsmittel der zugeführten Menge an Wasser angepasst werden. Die zugeführte Menge kann durch die Strömungssonde bestimmt werden. Alternativ oder zusätzlich kann durch die Zeitschaltvorrichtung eine bestimmte Menge an Flockungsmittel entsprechend dem erwarteten Zufluss an Wasser zugeführt werden. Hierdurch kann auch sichergestellt werden, dass im Wesentlichen kein Flockungsmittel in die Kanalisation gelangt, da die Menge an Flockungsmittel derart bestimmt werden kann, dass das gesamte zugeführte Flockungsmittel mit dem Fett im Wasser reagiert und sich im Fettabscheider absetzt.

Die Dosiervorrichtung kann eine Dosierpumpe umfassen. Dadurch wird auf technisch einfache Art und Weise das Flockungsmittel aktiv in den Fettabscheider befördert. Zudem kann die zugeführte Menge an Flockungsmittel schnell verändert werden.

In einer weiteren Ausführungsform umfasst die Dosiervorrichtung ein, vorzugsweise hydrostatisch gesteuertes, Ventil. Hierdurch wird auf technisch einfache Art und Weise das Flockungsmittel in den Fettabscheider transportiert. Die Wartungskosten bzw. der Wartungsaufwand der Abscheidevorrichtung werden aufgrund der technischen Einfachheit des Ventils weiter gesenkt.

In der Abscheidevorrichtung kann eine Rührvorrichtung zum Vermischen des Flockungsmittels mit dem Wasser in dem Fettabscheider angeordnet sein. Hierdurch wird die Effizienz der Abscheidevorrichtung erhöht, da durch die Vermischung das Flockungsmittel besser in Kontakt mit dem im Wasser gelösten Fett kommt.

Die Rührvorrichtung kann im Zulauf angeordnet sein oder einen geringeren Abstand zum Zulauf als zum Ablauf aufweisen. Hierdurch wird das Flockungsmittel mit dem Wasser frühzeitig in dem Fettabscheider durchmischt, so dass das Flockungsmittel zusammen mit dem Wasser eine lange Wegstrecke in dem Fettabscheider zurücklegt. Auf diese Weise wird sichergestellt, dass ein möglichst großer Teil des Fetts in dem Wasser mit dem Flockungsmittel reagiert und umgekehrt.

Die Aufgabe wird auch durch ein Verfahren zum Abscheiden von Fetten aus Wasser in einem Fettabscheider mit einem Zulauf und einem Ablauf gelöst, das folgende Schritte umfasst: Zuführen des Wassers durch den Zulauf in den Fettabscheider, Zuführen eines Flockungsmittels zum Ausflocken von Fetten aus dem Wasser aus einem Flockungsmittelbehälter in den Fettabscheider, insbesondere in den Zulauf, und Abführen des Wassers in den Ablauf, wobei das ausgeflockte Fett in einem Schlammfang des Fettabscheiders gesammelt wird.

Das Verfahren ist technisch einfach, da hierfür eine geringe Anzahl an Komponenten und nur ein Flüssigkeitsbehälter, nämlich der Fettabscheider selbst, benötigt werden. Zudem kann das Verfahren nach einer technisch einfachen Nachrüstung auch bei einem bestehenden konventionellen Schwerkraftfettabscheider angewandt werden. Darüber hinaus muss dem Wasser neben dem Flockungsmittel nichts weiter zugeführt werden.

Das Verfahren kann ferner folgenden Schritt umfassen: Vermischen des Wassers und des Flockungsmittels in dem Fettabscheider mit einer Rührvorrichtung, die insbesondere im Zulauf oder näher am Zulauf als am Ablauf angeordnet ist.

Das Verfahren kann ferner folgende Schritte umfassen: Überwachen der Menge an Flockungsmittel im Flockungsmittelbehälter, insbesondere mittels einer Füllstandsonde.

Bevorzugte Ausführungsformen der Erfindung ergeben sich aus den Unteransprüchen sowie aus der nachstehenden Beschreibung von Ausführungsbeispielen, die anhand von Abbildungen näher erläutert werden. Hierbei zeigen
- Fig. 1: eine Seitenansicht einer Ausführungsform der erfindungsgemäßen Abscheidevorrichtung,
- Fig. 2: eine Seitenansicht einer weiteren Ausführungsform der erfindungsgemäßen Abscheidevorrichtung, und
- Fig. 3: eine Seitenansicht einer weiteren Ausführungsform der erfindungsgemäßen Abscheidevorrichtung.

Bei der nachfolgenden Beschreibung werden für gleiche und gleich wirkende Teile dieselben Bezugsziffern verwendet.

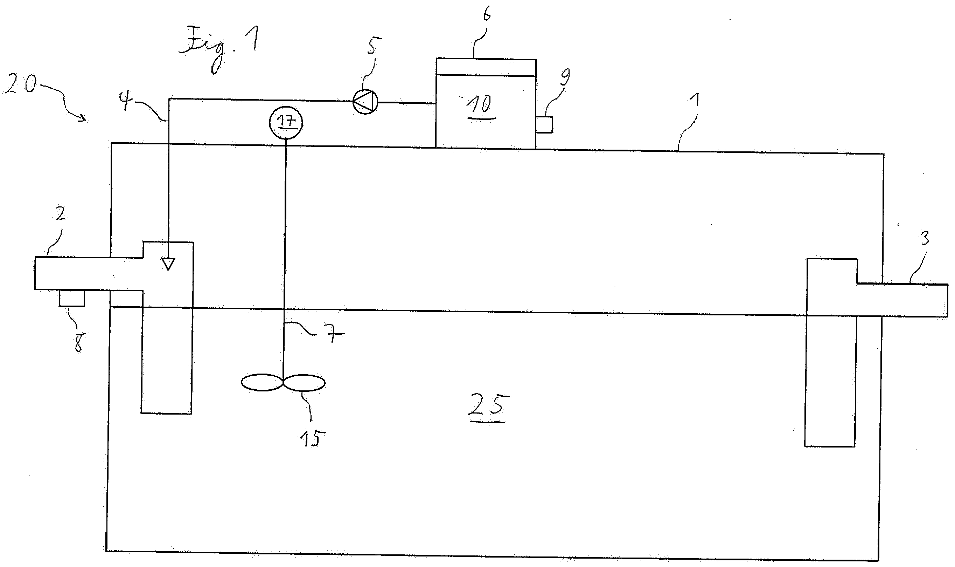

Fig. 1 zeigt eine Seitenansicht einer Ausführungsform der erfindungsgemäßen Abscheidevorrichtung 20. Die Abscheidevorrichtung 20 umfasst einen Fettabscheider 1 mit einem Zulauf 2 und einem Ablauf 3, einen Flockungsmittelbehälter 6 mit einer Zufuhrleitung 4 sowie eine Rührvorrichtung 7. Das zu reinigende Wasser 25 bzw. Wasser/Fett-Gemisch wird dem Fettabscheider 1 durch den Zulauf 2 zugeführt. Der Zulauf 2 weist eine L-förmige Form auf, so dass das Wasser 25 dem Fettabscheider 1 mit einer Strömungsrichtung nach unten, in Richtung des Bodens des Fettabscheiders 1, zugeführt wird.

Der Ablauf 3 weist ebenfalls eine L-förmige Form auf. Die Öffnung des Ablaufs 3 bzw. der Zufluss in den Ablauf 3 befindet sich an einer Position, die sich etwa in der Mitte zwischen der Wasseroberfläche und dem Boden des Fettabscheiders 1 befindet. Auf diese Weise wird sichergestellt, dass im Wesentlichen nur Wasser und kein Fett bzw. Feststoffe in den Ablauf 3 und damit in die Kanalisation gelangen. Der Zulauf 2 befindet sich höher als der Ablauf 3.

An der oberen Kante des Fettabscheiders 1 ist ein Flockungsmittelbehälter 6 angeordnet. Der Flockungsmittelbehälter 6 beinhaltet das Flockungsmittel 10. In den Fig. 1-3 ist der Flockungsmittelbehälter 6 zu etwa 80% mit Flockungsmittel 10 gefüllt. Andere Positionen bzw. Anordnungen des Flockungsmittelbehälters 6 relativ zum Fettabscheider 1, z.B. auch weiter entfernt von dem Fettabscheider 1, sind vorstellbar. Das Flockungsmittel 10 wird durch eine Zufuhrleitung 4 in den Zulauf 2 des Fettabscheiders 1 geführt. Dies geschieht mittels einer Dosierpumpe 5, die in der Zufuhrleitung 4 angeordnet ist.

Der Begriff Fett bzw. Fette umfasst auch Öle, fette Öle und Ähnliches.

In dem bzw. an dem Zulauf 2 ist eine Strömungssonde 8 angeordnet, die die Strömung bzw. die Menge an einströmendem Wasser 25 misst. Entsprechend der Menge an zugeführtem Wasser 25 wird mittels der Dosierpumpe 5 eine gewünschte Menge an Flockungsmittel 10 dem Fettabscheider 1 zugeführt. Vorstellbar ist auch, dass der Fettgehalt des einströmenden Wassers 25 gemessen wird und das Flockungsmittel 10 dementsprechend dosiert wird. Die Dosierpumpe 5 kann auch durch eine Zeitschaltung gesteuert werden. Zur Steuerung der zugeführten Menge an Flockungsmittel 10 kann eine Steuerungseinrichtung (nicht gezeigt) vorgesehen sein.

Der Flockungsmittelbehälter 6 umfasst eine Füllstandssonde 9, die die Menge an Flockungsmittel 10 in dem Flockungsmittelbehälter 6 misst bzw. überwacht. Die Füllstandsonde 9 kann den Füllstand an Flockungsmittel 10 mittels einer Anzeige anzeigen. Wenn die Menge an Flockungsmittel 10 in dem Flockungsmittelbehälter 6 unter eine definierte Schwelle fällt, so wird ein Signal ausgegeben, beispielsweise ein optischer und/oder akustischer Alarm, der den Anwender darauf hinweist, dass Flockungsmittel 10 nachgefüllt werden muss.

Vorstellbar ist auch, dass das Flockungsmittel 10 automatisch nachgefüllt wird, d.h. dem Flockungsmittelbehälter 6 aus einem Vorratsbehälter zugeführt wird, wenn die Füllstandssonde 9 einen zu niedrigen Füllstand an Flockungsmittel 10 meldet.

Der Fettabscheider 1 umfasst eine Rührvorrichtung 7. Die Rührvorrichtung 7 umfasst einen Rührvorrichtungsantrieb 17 und den Rührer 15. Die Rührvorrichtung 7 weist einen geringeren Abstand zu dem Zulauf 2 auf als zu dem Ablauf 3. Die Rührvorrichtung 7 bzw. der Rührer 15, der durch den Rührvorrichtungsantrieb 17 angetrieben wird, durchmischt das Wasser 25 mit dem Flockungsmittel 10. Durch die Rotation des Rührers 15 findet eine verstärkte Durchmischung des Wassers 25 mit dem Flockungsmittel 10 statt, womit eine bessere Reaktion zwischen Flockungsmittel 10 und Wasser 25 bzw. dem in Fett gelösten Wasser 25 stattfindet. Die Effizienz des Fettabscheiders 10 wird hierdurch weiter erhöht. Der Rührer 15 kann ständig oder nur zu gewissen Zeiten betrieben werden.

Der in Fig. 1 gezeigte Rührer 15 befindet sich in dem oberen Drittel des Wassers 25. Vorstellbar ist jedoch auch, dass sich der Rührer 15 näher an der Oberfläche des Wassers 25 befindet oder sich näher an dem Boden des Fettabscheiders 1 befindet.

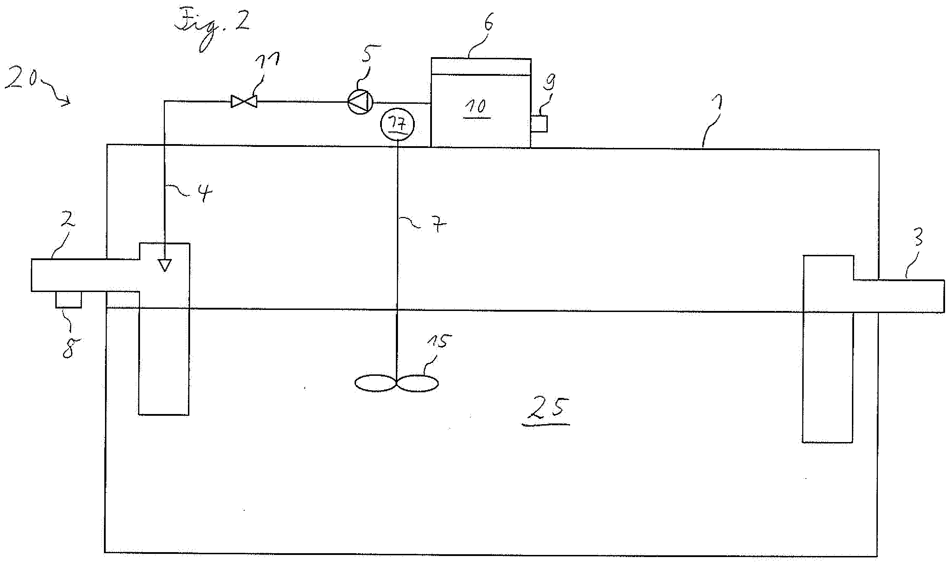

Fig. 2 zeigt eine Seitenansicht einer weiteren Ausführungsform der erfindungsgemäßen Abscheidevorrichtung 20. Der Fettabscheider 1 der Fig. 2 entspricht im Wesentlichen dem Fettabscheider der Fig. 1. Im Unterschied zu Fig. 1 ist in der Zufuhrleitung 4 neben der Dosierpumpe 5 ein Ventil 11 angeordnet. Das Ventil 11 kann durch eine Zeitschaltung oder durch die Strömungssonde 8 hydrostatisch gesteuert werden. Die Rührvorrichtung 7 in Fig. 2 befindet sich weiter vom Zulauf 2 entfernt als in Fig. 1. Die Rührvorrichtung 7 ist in Fig. 2 jedoch weiterhin näher am Zulauf 2 als am Ablauf 3 angeordnet, d.h. sie weist eine geringe Distanz zum Zulauf 2 als zum Ablauf 3 auf.

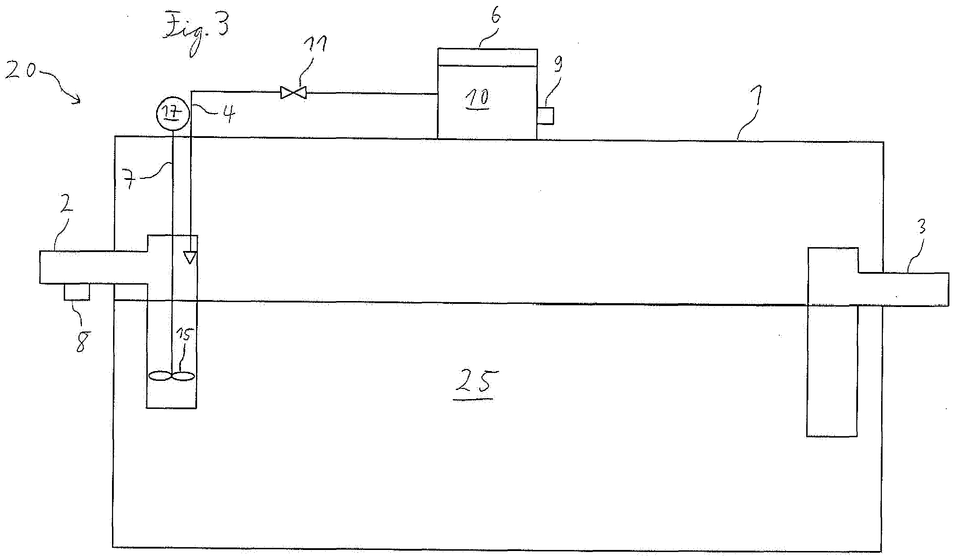

Fig. 3 zeigt eine Seitenansicht einer weiteren Ausführungsform der erfindungsgemäßen Abscheidevorrichtung 20. Bei dieser Ausführungsform ist der Rührer 15 der Rührvorrichtung 7 in dem Zulauf 2 angeordnet. Auf diese Weise findet bereits in dem Zulauf eine (verbesserte) Vermischung zwischen dem Wasser 25 und dem Flockungsmittel 10 statt.

Vorstellbar ist auch, dass die Zufuhrleitung 4 das Flockungsmittel 10 dem Fettabscheider 1 an einer anderen Stelle zuführt. Diese Stelle kann sich außerhalb des Zulaufs 2 befinden und kann sich beispielsweise auch näher am Ablauf 3 als am Zulauf 2 befinden, d.h. eine geringeren Abstand zum Ablauf 3 als zum Zulauf 2 aufweisen. In der Zufuhrleitung 4 ist in Fig. 3 nur ein Ventil 11 angeordnet. Das Ventil 11 wird vorzugsweise hydrostatisch gesteuert und öffnet bzw. schließt die Zufuhrleitung 4. Das Ventil 11 kann alternativ oder zusätzlich durch eine Zeitschaltung gesteuert werden.

Das Flockungsmittel 10 ist ein Flockungs- und Emulsionsspaltmittel auf Polymerbasis. Andere Arten von Flockungsmittel bzw. Emulsionsspaltmittel sind vorstellbar.

Das Flockungsmittel 10 bindet die im Wasser 25 gelösten Fettteilchen, so dass sie Klumpen bilden und eine größere Dichte als das Wasser 25 aufweisen. Daher setzt sich das gebundene Fett rein gravitativ in dem Fettabscheider 1 ab. Hier wird es von einem Schlammfang (nicht gezeigt) aufgenommen und gesammelt. Das im Schlammfang aufgefangene Fett wird zusammen mit den abgesetzten Feststoffen wie bei bisher bekannten Fettabscheidern 1 bei der regulären, von der Norm vorgeschriebenen Wartung des Fettabscheiders 1 entsorgt.

Mit der erfindungsgemäßen Abscheidevorrichtung 20 wird es möglich, die Konzentration lipophiler Stoffe im Wasser 25 auf einen Wert von kleiner als 100 Milligramm pro Liter zu reduzieren. Durch die Einhaltung der vorgeschriebenen Grenzwerte werden Sanktionen durch die zuständigen Behörden vermieden. Die Wartung der erfindungsgemäßen Abscheidevorrichtung 20 unterscheidet sich von der Wartung einer Standardanlage nur durch das Nachfüllen des Flockungsmittels 10 in dem Flockungsmittelbehälter 6.

Der Fettabscheider 1 in der Abscheidvorrichtung 20 beruht auf dem gleichen Grundprinzip, d.h. der Schwerkraftabscheidung, wie bisher bekannte Fettabscheider. Die Effizienz der Fettabscheidung wird durch das Flockungsmittel 10 jedoch erheblich verbessert und somit wird die Fett- bzw. Ölkonzentration des abgeführten Wassers 25 deutlich verringert.

An dieser Stelle sei darauf hingewiesen, dass alle oben beschriebenen Teile für sich alleine gesehen und in jeder Kombination, insbesondere die in den Zeichnungen dargestellten Details, als erfindungswesentlich beansprucht werden. Abänderungen hiervon sind dem Fachmann geläufig.

### Bezugszeichenliste:

- 1: Fettabscheider
- 2: Zulauf
- 3: Ablauf
- 4: Zufuhrleitung
- 5: Dosierpumpe
- 6: Flockungsmittelbehälter
- 7: Rührvorrichtung
- 8: Strömungssonde
- 9: Füllstandsonde
- 10: Flockungsmittel
- 11: Ventil
- 15: Rührer
- 17: Rührvorrichtunganstrieb
- 20: Abscheidevorrichtung
- 25: Wasser

## Patentansprüche

1. Abscheidevorrichtung (20), um Fette aus Wasser (25) abzuscheiden, umfassend
einen Fettabscheider (1) mit einem Zulauf (2) zum Zuführen des Wassers (25) und einem Ablauf (3) zum Abführen des Wassers (25), und
einen Flockungsmittelbehälter (6) mit einem Flockungsmittel (10) zum Ausflocken von Fetten aus dem Wasser (25),
eine Zufuhrleitung (4) zum Zuführen des Flockungsmittels (10) aus dem Flockungsmittelbehälter (6) in den Fettabscheider (1) und
einen Schlammfang zum Aufnehmen des ausgeflockten Fetts.

2. Abscheidevorrichtung (20) nach Anspruch 1,
**dadurch gekennzeichnet, dass**
die Zufuhrleitung (4) zum Zuführen des Flockungsmittels (10) in den Zulauf (2) ausgebildet ist.

3. Abscheidevorrichtung (20) nach Anspruch 1 oder 2,
**dadurch gekennzeichnet, dass**
eine Füllstandsonde (9) zum Überwachen der Menge des Flockungsmittels (10) im Flockungsmittelbehälter (6) vorgesehen ist.

4. Abscheidevorrichtung (20) nach einem der vorhergehenden Ansprüche,
**gekennzeichnet durch**
eine Dosiervorrichtung zum Dosieren der in den Fettabscheider (1) zugeführten Menge an Flockungsmittel (10) in der Zufuhrleitung (4).

5. Abscheidevorrichtung (20) nach einem der vorhergehenden Ansprüche, insbesondere nach Anspruch 4,
**dadurch gekennzeichnet, dass**
die Dosiervorrichtung mittels einer im Zulauf (2) angeordneten Strömungssonde (8) und/oder mittels einer Zeitschaltvorrichtung gesteuert wird.

6. Abscheidevorrichtung (20) nach einem der vorhergehenden Ansprüche, insbesondere nach Anspruch 4 oder 5,
**dadurch gekennzeichnet, dass**
die Dosiervorrichtung eine Dosierpumpe (5) umfasst.

7. Abscheidevorrichtung (20) nach einem der vorhergehenden Ansprüche, insbesondere nach einem der Ansprüche 4-6,
**dadurch gekennzeichnet, dass**
die Dosiervorrichtung ein, vorzugsweise hydrostatisch gesteuertes, Ventil (11) umfasst.

8. Abscheidevorrichtung (20) nach einem der vorhergehenden Ansprüche,
**dadurch gekennzeichnet, dass**
eine Rührvorrichtung (7) zum Vermischen des Flockungsmittels (10) mit dem Wasser (25) in dem Fettabscheider (1) angeordnet ist.

9. Abscheidevorrichtung (20) nach einem der vorhergehenden Ansprüche, insbesondere nach Anspruch 8,
**dadurch gekennzeichnet, dass**
die Rührvorrichtung (7) im Zulauf (2) angeordnet ist oder einen geringeren Abstand zum Zulauf (2) als zum Ablauf (3) aufweist.

10. Verfahren zum Abscheiden von Fetten aus Wasser (25) in einem Fettabscheider (1) mit einem Zulauf (2) und einem Ablauf (3), folgende Schritte umfassend:
- Zuführen des Wassers (25) durch den Zulauf (2) in den Fettabscheider (1),
- Zuführen eines Flockungsmittels (10) zum Ausflocken von Fetten aus dem Wasser (25) aus einem Flockungsmittelbehälter (6) in den Fettabscheider (1), insbesondere in den Zulauf (2), und
- Abführen des Wassers (25) durch den Ablauf (3),
wobei das ausgeflockte Fett in einem Schlammfang des Fettabscheiders (1) gesammelt wird.

11. Verfahren nach Anspruch 10, ferner folgenden Schritt umfassend:
Vermischen des Wassers (25) und des Flockungsmittels (10) in dem Fettabscheider (1) mit einer Rührvorrichtung (7), die insbesondere im Zulauf (2) oder näher am Zulauf (2) als am Ablauf (3) angeordnet ist.

12. Verfahren nach Anspruch 10 oder 11, ferner folgenden Schritt umfassend:
Überwachen der Menge an Flockungsmittel (10) im Flockungsmittelbehälter (6), insbesondere mittels eine Füllstandsonde (9).

13. Verfahren nach einem der Ansprüche 10-12, wobei
die in den Fettabscheider (1) zugeführte Menge an Flockungsmittel (10) mittels einer Dosiervorrichtung gesteuert wird.

14. Verfahren nach einem der Ansprüche 10-13, insbesondere nach Anspruch 13, ferner folgenden Schritt umfassend:
Steuern der Dosiervorrichtung mittels einer im Zulauf (2) angeordneten Strömungssonde (8) und/oder einer Zeitschaltvorrichtung.
